# EUROPÄISCHE PATENTSCHRIFT

(11) **EP 3 755 591 B1**
(45) Veröffentlichungstag und Bekanntmachung des Hinweises auf die Patenterteilung: **27.03.2024**
(21) Anmeldenummer: 19708399.1
(22) Anmeldetag: 11.02.2019
(51) Int. Cl.: B60W 20/12, B60W 30/182, G01C 21/34, G01C 21/36

(54) **SYSTEM UND VERFAHREN ZUR AUTOMATISCHEN EINSTELLUNG VON FAHRZEUGFUNKTIONEN**
SYSTEM AND METHOD FOR AUTOMATIC SETTING OF VEHICLE FUNCTIONS
SYSTÈME ET PROCÉDÉ DE RÉGLAGE AUTOMATIQUE DES FONCTIONS DU VEHICULE

(30) Priorität: 21.02.2018 DE 102018202623
(43) Veröffentlichungstag der Anmeldung: 30.12.2020
(73) Patentinhaber: Bayerische Motoren Werke Aktiengesellschaft, 80809 München (DE)
(72) Erfinder: WILMS, Daniel, 80689 München (DE); BEKAN, Adnan, 80939 München (DE)
(86) Internationale Anmeldenummer: PCT/EP2019/053316
(87) Internationale Veröffentlichungsnummer: WO 2019/162129

(56) Entgegenhaltungen:
- EP-A1- 2 689 982
- WO-A1-2016/202360
- DE-A1-102013 223 331
- GB-A- 2 547 714
- SCHLOTE ARIEH ET AL: "Cooperative Regulation and Trading of Emissions Using Plug-in Hybrid Vehicles", IEEE TRANSACTIONS ON INTELLIGENT TRANSPORTATION SYSTEMS, IEEE, PISCATAWAY, NJ, USA, vol. 14, no. 4, 1 December 2013 (2013-12-01), pages 1572-1585, XP011532576, ISSN: 1524-9050, DOI: 10.1109/TITS.2013.2264754 [retrieved on 2013-11-25]

## Beschreibung

Die vorliegende Erfindung betrifft ein System und ein Verfahren zur automatischen Einstellung von Fahrzeugfunktionen unter Berücksichtigung externer Einflussfaktoren. Immer mehr Ballungszentren sehen sich mit der Problematik verkehrsbedingter Luftbelastungen konfrontiert. Daher kommt es immer häufiger dazu, dass so genannte Umweltzonen eingeführt werden. In den Umweltzonen wird das Befahren durch emittierende und/oder stark emittierende Fahrzeuge aufgrund von akuten verkehrsbedingten Luftbelastungen eingeschränkt oder verboten. Eine verkehrsbedingte Luftbelastung liegt vor, wenn zuvor definierte Luftqualitätsgrenzwerde nicht eingehalten bzw. überschritten werden. Informiert sich ein Fahrer nicht rechtzeitig über zum Teil hochdynamische Verkehrseinschränkungen und/oder Verkehrsverbote durch emittierende Fahrzeuge, kann es im schlechtesten Fall dazu kommen, dass der Nutzer bzw. Fahrer des betroffenen Fahrzeugs die Umweltzone nicht be- bzw. durchfahren kann. Dies kann dazu führen, dass er ein bestimmtes Fahrziel nicht bzw. nur mit erheblicher zeitlicher Verzögerung - z.B. durch Umfahrung der Umweltzone erreichen kann, obschon das Fahrzeug unter Verwendung bestimmter Fahrzeugfunktionen dynamische Erfordernisse von Ballungszentren mit Bezug auf Emissionswerte einhalten könnte.

Die EP 2 689 982 A1 beschreibt ein Verfahren zum Bestimmen einer Modusumschaltung zwischen Antriebsquellen eines Hybridfahrzeugs. Das Verfahren umfasst ein Empfangen von Informationen über eine geplante Route, die eine Route angibt, die mit dem Hybridfahrzeug befahren werden soll, und von Verschmutzungsinformationen, die die Route betreffen; und ein Berechnen eines oder mehrerer Umschaltpunkte entlang der Route, an denen in einen emissionsreduzierten Modus umgeschaltet werden soll, basierend auf mindestens der geplanten Routeninformation und der Verschmutzungsinformation.

Die DE 10 2013 223 331 A1 beschreibt ein Verfahren zum Ansteuern mindestens eines von mindestens zwei Antriebssystemen eines Fahrzeugs, die sich hinsichtlich ihrer Umweltemissionen unterscheiden, in Abhängigkeit von ersten Daten, welche die Emissionssensitivität der Umgebung des Fahrzeugs charakterisieren, und in Abhängigkeit von zweiten Daten, welche die Emissionssensitivität eines Gebiets charakterisieren, durch welches eine Fahrroute des Fahrzeugs verläuft.

Die Aufgabe der Erfindung besteht darin, die vorstehend genannten Nachteile zu vermeiden und eine Lösung aufzuzeigen, die es ermöglicht, Fahrzeugfunktionen automatisch mit Bezug auf externe Einflussfaktoren einzustellen.

Diese Aufgabe wird erfindungsgemäß durch die Merkmale der unabhängigen Ansprüche gelöst. Bevorzugte Ausführungsformen sind Gegenstand der abhängigen Ansprüche.

Die vorstehend genannte Aufgabe wird durch ein System zur automatischen Einstellung von Fahrzeugfunktionen eines Fahrzeugs unter Berücksichtigung externer Einflussfaktoren gelöst, umfassend:
zumindest einen Backend-Server der eingerichtet ist:
   - Fahrzeugdaten des Fahrzeugs zu empfangen;
   - unter Berücksichtigung zumindest eines Teils der Fahrzeugdaten Daten mit Bezug auf die externen Einflussfaktoren zu ermitteln;
   - optimale Einstellungen von Fahrzeugfunktionen des Fahrzeugs unter Berücksichtigung der Fahrzeugdaten und der Daten mit Bezug auf die externen Einflussfaktoren zu ermitteln; und
   - die optimalen Einstellungen der Fahrzeugfunktionen an das Fahrzeug zu übermitteln;
wobei das Fahrzeug eingerichtet ist, die Fahrzeugfunktionen derart zu steuern, dass die ermittelten optimalen Fahrzeugfunktionen übernommen werden.

Der Begriff Fahrzeug umfasst PKW, LKW, Busse, Wohnmobile, Krafträder, etc., die der Beförderung von Personen, Gütern, etc. dienen. Insbesondere umfasst der Begriff Kraftfahrzeuge zur Personenbeförderung.

Das Fahrzeug kann ein Kommunikationsmodul umfassen. Das Kommunikationsmodul ist in der Lage, eine Kommunikationsverbindung mit anderen Kommunikationsteilnehmern, z.B. anderen Fahrzeugen, dem Backend-Server, mobilen Endgeräten etc., aufzubauen, um Daten zu übertragen. Das Kommunikationsmodul kann ein Teilnehmeridentitätsmodul bzw. ein Subscriber Identity Module bzw. eine SIM-Karte (nicht gezeigt) umfassen, welche(s) dazu dient, eine Kommunikationsverbindung über ein Mobilfunksystem aufzubauen. Das Teilnehmeridentitätsmodul identifiziert dabei das Kommunikationsmodul eindeutig im Mobilfunknetz. Bei der Kommunikationsverbindung kann es sich um eine Datenverbindung (z.B. Paketvermittlung) und/oder um eine leitungsgebundene Kommunikationsverbindung (z.B. Leitungsvermittlung) handeln. Auch eine drahtlose Kommunikationsverbindung über weitere gängige und künftige Technologien, z.B. lokale Netzwerke bzw. Local Area Networks (LANs) wie z.B. Wireless LANs etc. kann über das Kommunikationsmodul mit anderen Kommunikationsteilnehmern aufgebaut werden.

Insbesondere kann das Fahrzeug über das Kommunikationsmodul eine Kommunikationsverbindung mit dem Backend-Server aufbauen, um die Fahrzeugdaten an den Backend-Server zu übertragen. Das Fahrzeug kann beispielsweise eingerichtet sein, während des Fahrbetriebs Fahrzeugdaten an den Backend-Server zu übertragen.

Beispielsweise kann der Backend-Server eingerichtet sein, für jedes - zuvor entsprechend registrierte - Fahrzeug einen digitalen Zwilling erstellen. Ein digitaler Zwilling bzw. Digital Twin ist eine virtuelle Repräsentation eines physikalischen Objekts. Der digitale Zwilling eines Fahrzeugs im Sinne dieser Anmeldung umfasst insbesondere eine digitale Repräsentation von Fahrzeugdaten im Backend-Server. Insbesondere ist ein Digitaler Zwilling eine dedizierte Umgebung, um Fahrzeugdaten zu hinterlegen, diese abzurufen und/oder Änderungen zu erfassen. Die Fahrzeugdaten umfassen Sensordaten. Das Fahrzeug kann eingerichtet sein, in regelmäßigen Abständen, z.B. alle 0,1 Sekunden (s), 0,5 Sekunden (s), alle 1 s, alle 1,5 s, etc. und/oder zu vordefinierten Ereignissen, z.B. nach jeder Datenerfassung, jeder zweiten Datenerfassung, etc. durch den jeweiligen Sensor die Sensordaten an den Backend-Server übermitteln. Der digitale Zwilling kann ein oder mehrere Datenmodelle für die Verarbeitung der Fahrzeugdaten umfassen.

Der Backend-Server ist eingerichtet, unter Berücksichtigung zumindest eines Teils der Fahrzeugdaten des Fahrzeugs Daten mit Bezug auf die externen Einflussfaktoren zu ermitteln. Beispielsweise kann der Backend-Server selbst eingerichtet sein, zumindest einen Telematik-Dienst zu erbringen. Der Telematik-Dienst kann die Ermittlung und Bereitstellung von Daten mit Bezug auf die externen Einflussfaktoren umfassen. Im Rahmen dieses Telematik-Dienstes können die Daten mit Bezug auf externe Einflussfaktoren zu vordefinierten Ereignissen von ein oder mehreren Service Providern bzw. Dienstleistungs-Anbietern empfangen und/oder abgerufen werden (polling). Darüber hinaus oder alternativ dazu kann der Backend-Server eingerichtet sein, Daten mit Bezug auf die externen Einflussfaktoren - unter Berücksichtigung zumindest eines Teils der Fahrzeugdaten - von zumindest einem Externen Service Providern zu vordefinierten Ereignissen abzurufen. Ein Service Provider kann ein Internet Service Provider sein, der über das Internet Dienste, Inhalte und/oder technische Leistungen bereitstellt, die für die Nutzung oder den Betrieb von Inhalten und Diensten im Internet erforderlich sind. Vordefinierte Ereignisse können z.B. umfassen: periodisch, z.B. alle 1 Sekunden, alle 2 Sekunden, jede Minute, alle 5 Minuten etc. Darüber hinaus oder alternativ dazu können vordefinierte Ereignisse umfassen: nach Empfangen von Fahrzeugdaten und/oder bei anderen geeigneten vordefinierten Ereignissen.

Beispielsweise kann der zumindest eine Telematik-Dienst die Bereitstellung von Quasi-Echtzeit-Informationen mit Bezug auf aktuelle Luftqualitätswerte in betroffenen

Agglomerationen (z.B. Ballungsräumen und/oder Stadtregionen und/oder Verdichtungsräumen und/oder Innenstadtgebieten etc.) umfassen. Darüber hinaus oder alternativ dazu kann der zumindest eine Telematik-Dienst die Bereitstellung von hochaktuelle Einschränkungen oder Verboten mit Bezug auf das Befahren der jeweiligen Agglomerationen durch emittierende und/oder stark emittierende Fahrzeuge aufgrund verkehrsbedingter Luftbelastungen und/oder weiterer Gründe umfassen.

Der Backend-Server ist eingerichtet, unter Berücksichtigung der Fahrzeugdaten und der Daten mit Bezug auf die externen Einflussfaktoren optimale Einstellungen von Fahrzeugfunktionen zu ermitteln. Dies kann über eine geeignete Recheneinheit erfolgen. In einem nächsten Schritt kann der Backend-Server eingerichtet sein, die optimalen Einstellungen der Fahrzeugfunktionen an das Fahrzeug zu übermitteln. Im Fahrzeug können die betroffenen Fahrzeugfunktionen derart gesteuert werden, dass die durch den Backend-Server ermittelten optimalen Fahrzeugfunktionen unter Berücksichtigung der externen Einflussfaktoren automatisch übernommen werden.

Vorteilhafter Weise kann das Fahrzeug Fahrzeugfunktionen automatisch an hochdynamische externe Einflussfaktoren anpassen, ohne dass es eines Eingriffs durch den Fahrer oder Nutzer des Fahrzeugs bedarf.

Vorzugsweise umfassen die externen Einflussfaktoren:
- zeitaktuelle Luftqualitätswerte;
- zeitaktuelle Fahreinschränkungen in Umweltzonen für emittierende und/oder stark emittierende Fahrzeuge; und/oder
- lokale Verkehrsvorgaben und/oder Verkehrsverordnungen, die auf der Fahrstrecke gelten.

Zeitaktuelle Luftqualitätswerte umfassen insbesondere zeitaktuelle Werte mit Bezug auf verkehrsbedingte Luftbelastungen. Eine verkehrsbedingte Luftbelastung liegt vor, wenn zuvor beispielsweise durch Behörden festgelegte Luftqualitätsgrenzwerte nicht eingehalten werden.

Der Begriff Umweltzone umfasst Gebiete in städtischen Agglomerationen, in denen das Befahren durch emittierende und/oder stark emittierende Fahrzeuge aufgrund verkehrsbedingter Luftbelastungen eingeschränkt oder verboten wird. Insbesondere können die Fahreinschränkungen bzw. Fahrverbote von emittierenden und/oder stark emittierenden Fahrzeugen hochdynamisch mit Bezug auf zeitaktuelle Luftqualitätswerte erfolgen.

Beispielsweise kann jede Agglomeration über ein so genanntes "Smart City"-Konzept entsprechende, hochdynamische Fahreinschränkungen bzw. Fahrverbote kommunizieren. "Smart City" ist ein Sammelbegriff für gesamtheitliche Entwicklungskonzepte, die darauf abzielen, Städte bzw. Agglomerationen effizienter, technologisch fortschrittlicher und grüner zu gestalten. Diese Konzepte umfassen technische und gesellschaftliche Innovationen. "Smart City" umfasst die Dimension Mobilität bzw. "Smarte Mobilität". Diese Dimension zeichnet sich dadurch aus, dass sie energieeffizient und emissionsarm ist. Insbesondere wird die vorhandene Infrastruktur verbessert, indem Informations- und Kommunikationstechnologien eingesetzt werden, die dabei helfen, den Verkehr zu überwachen. Die Verkehrsüberwachung umfasst die Erfassung zeitaktueller Luftqualitätswerte.

Somit können zeitaktuelle Luftqualitätswerte und/oder zeitaktuelle Fahreinschränkungen als externe Einflussfaktoren in Umweltzonen für emittierende und/oder stark emittierende Fahrzeuge beispielsweise automatisch unter Verwendung geeigneter Informations- und Kommunikationstechnologien automatisch erfasst und an den Backend-Server übermittelt werden.

Darüber hinaus oder alternativ dazu können externe Einflussfaktoren lokale Verkehrsvorgaben und/oder Verkehrsverordnungen, die auf einer (geplanten) Fahrstrecke gelten, umfassen.

Der Backend-Server kann unter Berücksichtigung der externen Einflussfaktoren optimale Einstellungen von Fahrzeugfunktionen ermitteln.

Erfindungsgemäß umfassen die Fahrzeugdaten:
- aktuelle Emissions-Zustandsdaten des Fahrzeugs.

Die Fahrzeugdaten umfassen aktuelle Emissions-Zustandsdaten des Fahrzeugs. Emissions-Zustandsdaten umfassen alle Daten, die einen Bezug zu Emissionen bzw. Emissionswerte des Fahrzeugs haben. Erfindungsgemäß umfassen Emissions-Zustandsdaten:
- Daten zu Fahrzeugemissionen des Fahrzeugs mit Bezug auf die Fahrgeschwindigkeit.

Darüber hinaus können die Fahrzeugdaten zumindest ein geplantes Fahrziel des Fahrzeugs umfassen. Das geplante Fahrziel kann eine späteste Ankunftszeit am geplanten Fahrziel umfassen.

Das geplante Fahrziel und eine späteste Ankunftszeit des Fahrzeugs am geplanten Fahrziel können an den Backend-Server übermittelt werden. Beispielsweise kann ein Nutzer des Fahrzeugs über das Navigationssystem und/oder über ein geeignetes, mit dem Fahrzeug gekoppeltes mobiles Endgerät ein geplantes Fahrziel eingeben. Das Fahrziel kann vom Fahrzeug bzw. vom mobilen Endgerät (z.B. Smartphone) an den Backend-Server übermittelt werden. Darüber hinaus können weitere persönliche Daten des Nutzers des Fahrzeugs vom Fahrzeug bzw. vom mobilen Endgerät an den Backend-Server übermittelt werden, wie z.B. Daten eines persönlichen elektronischen Kalenders, über die eine späteste Ankunftszeit am geplanten Fahrziel berechnet bzw. ermittelt werden kann. Die späteste Ankunftszeit kann auch über eine Ein- und Ausgabeeinheit des Fahrzeugs bzw. des mobilen Endgeräts vom Nutzer des Fahrzeugs eingegeben und an den Backend-Server übermittelt werden.

Der Backend-Server kann unter Berücksichtigung der Fahrzeugdaten optimale Einstellungen von Fahrzeugfunktionen ermitteln.

Erfindungsgemäß umfassen die Fahrzeugfunktionen:
- eine maximale Höchstgeschwindigkeit, die erforderlich ist, um
   -- zeitaktuelle Fahreinschränkungen in Umweltzonen zu umgehen.

Erfindungsgemäß ermittelt der Backend-Server unter Berücksichtigung der Fahrzeugdaten und der externen Einflussfaktoren eine maximale Höchstgeschwindigkeit, die erforderlich ist bzw. eingehalten werden muss, um zeitaktuelle Fahreinschränkungen in Umweltzonen zu umgehen, da bei der ermittelten maximalen Höchstgeschwindigkeit die Emissionswerte derart sind, dass Fahreinschränkungen umgangen werden. Darüber hinaus kann der Backend-Server unter Berücksichtigung der Fahrzeugdaten und der externen Einflussfaktoren eine maximale Höchstgeschwindigkeit ermitteln die erforderlich ist bzw. eingehalten werden muss, um lokale Verkehrsvorgaben und/oder Verkehrsverordnungen einzuhalten. Mit anderen Worten können die Fahrzeugfunktionen eine Drosselung des Fahrzeugs auf die ermittelte maximale Höchstgeschwindigkeit umfassen.

Darüber hinaus kann der Backend-Server eine modifizierte (z.B. nicht optimale) Fahrroute ermitteln, die erforderlich ist, um zeitaktuellen Fahreinschränkungen in Umweltzonen zu umgehen bzw. zu umfahren. Beispielsweise können zeitaktuelle Fahreinschränkungen erfordern, dass nur emissionsfreie Fahrzeuge in bzw. durch die Umweltzone eines Stadtgebiets fahren dürfen, wohingegen das Fahrzeug von einem Verbrennungsmotor angetrieben wird. In diesem Fall kann der Backend-Server eine erforderliche Umfahrung der Umweltzone ermitteln. Darüber hinaus oder alternativ dazu kann der Backend-Server eingerichtet sein, eine modifizierte (z.B. nicht optimale) Fahrroute ermitteln, die erforderlich ist, um lokale Verkehrsvorgaben und/oder Verkehrsverordnungen zu umgehen. Mit anderen Worten können die Fahrzeugfunktionen automatische Routenanpassungen umfassen.

Darüber hinaus oder alternativ dazu können die Fahrzeugfunktionen Fahrmodi, die einen Einfluss auf die Fahrzeugemissionen bzw. die Emissionsrate des Fahrzeugs haben, umfassen. Solche Fahrmodi können einen Fahrmodus "ECO PRO" umfassen, der die Emissionsrate des Fahrzeugs reduziert.

Vorteilhafter Weise kann der Backend-Server unter Berücksichtigung der Fahrzeugdaten und der externen Einflussfaktoren optimale Einstellungen von Fahrzeugfunktionen ermitteln, die dann an das Fahrzeug übermitteln bzw. übertragen werden können. Diese werden dann vom Fahrzeug automatisch übernommen.

Vorzugsweise ist das Fahrzeug ein Hybridfahrzeug, wobei die Fahrzeugfunktionen Betriebsmodi des Fahrzeugs umfassen.

Der Begriff Hybridfahrzeug umfasst Fahrzeuge, die der Beförderung von Personen, Gütern, etc. dienen und ein hybrides Antriebskonzept aufweisen. Insbesondere umfasst der Begriff aber Landfahrzeuge wie z.B. Kraftfahrzeuge zur Personenbeförderung mit hybriden Antriebskonzepten.

Fahrzeuge mit hybriden Antriebskonzepten bzw. Hybridantrieben (Hybridfahrzeuge) zeichnen sich dadurch aus, dass sich ihr Antrieb aus zumindest zwei unterschiedlichen Antreiben die von jeweils unterschiedlichen Energiespeichern gespeist werden, zusammensetzt. Beispielsweise kann die Antriebs-Kombination von Elektro- und Verbrennungsmotor vorliegen. Die Energiespeicher sind dann die Batterie - Z.B. Lithium-Ionen Akkumulator - als elektrischer Energiespeicher - und der Kraftstofftank. Moderne Hybridfahrzeuge bieten Ihren Nutzern bzw. Fahrern die Möglichkeit, aus verschiedenen Betriebsmodi mit Bezug auf die hybriden Antriebskonzepte zu wählen. Beispielsweise kann bei vorgenannter Antriebskombination zwischen Elektro- und Verbrennungsmotor ein Betriebsmodus "automatisch" bereitgestellt werden, bei dem das Fahrzeug unter Berücksichtigung fahrzeugspezifischer Parameter - z.B. unter Berücksichtigung von Leistung und Energieverbrauch - die optimale Antriebsvariante wählt bzw. entscheidet, ob das Hybridfahrzeug allein vom Elektromotor, allein vom Verbrennungsmotor oder parallel von beiden Motoren angetrieben wird. Ein weiteres Beispiel ist der Betriebsmodus "elektrisch" zur Auswahl bereitgestellt werden, bei dem der Antrieb rein durch den Elektromotorerfolgt. Darüber hinaus kann ein Betriebsmodus "konventionell" zur Wahl bereitgestellt werden, bei dem der Antrieb rein durch den Verbrennungsmotor erfolgt. In einem weiteren Beispiel kann der Betriebsmodus "Laden" ausgewählt werden, in dem der elektrische Energiespeicher durch den Verbrennungsmotor geladen wird, um die rein elektrische Reichweite des Fahrzeugs zu erhöhen.

Die Fahrzeugfunktionen können bei Hybridfahrzeugen die Betriebsmodi des Fahrzeugs umfassen. Vorteilhafter Weise kann für Gebiete, in die keine emittierenden Fahrzeuge einfahren dürfen, durch den Backend-Server automatisch ein Betriebsmodus "elektrisch" ermittelt und an das Fahrzeug gesendet werden, wo dieser Betriebsmodus für in dem Gebiet automatisch ausgewählt wird.

In einem Beispiel können die Fahrzeugdaten eine geplante Route eines Hybridfahrzeugs umfassen. Der Backend-Server kann unter Berücksichtigung der geplanten Route als externen Einflussfaktor ermitteln, dass auf der geplanten Route ein Streckenabschnitt von 25 Kilometern (km) Länge nur von emissionsfreien Fahrzeugen befahren werden darf. Der Backend-Server kann aus dem zum Hybridfahrzeug gespeicherten digitalen Zwilling auslesen, dass das Hybridfahrzeug lediglich eine rein elektrische Restreichweite von 20 km hat. In diesem Fall kann der Backend-Server als optimale Einstellung einer Fahrzeugfunktion unter Berücksichtigung der Fahrzeugdaten und der externen Einflussfaktoren ermitteln, dass der Betriebsmodus "Laden" gewählt werden muss, um elektrischen Energiespeicher des Hybridfahrzeugs durch den Verbrennungsmotor zu laden. Als weitere optimale Einstellung einer Fahrzeugfunktion kann der Backend-Server 120ermitteln, dass kurz vor Eintritt des nur rein elektrisch befahrbaren Streckenabschnitts der Betriebsmodus "elektrisch" ist.

Der Backend-Server kann die ermittelten optimalen Einstellungen der Fahrzeugfunktionen an das Fahrzeug übermitteln. Das Fahrzeug kann mithilfe einer Steuereinheit das Fahrzeug 110 derart steuern, dass der Betriebsmodus "Laden" eingestellt wird. Kurz vor Erreichen der rein elektrisch befahrbaren Strecke kann die Steuereinheit das Fahrzeug derart steuern, dass der Betriebsmodus "rein elektrisch" eingestellt wird.

Vorteilhafter Weise können die Betriebsmodi bei Hybridfahrzeugen automatisch im Fahrzeug entlang der Strecke - wie durch die externen Einflussfaktoren mit Bezug auf die Fahrzeugdaten erforderlich - übernommen werden.

Gemäß einem zweiten Aspekt wird die zugrundeliegende Aufgabe durch ein Verfahren zur automatischen Einstellung von Fahrzeugfunktionen eines Fahrzeugs unter Berücksichtigung externer Einflussfaktoren gelöst, umfassend:
Empfangen, an einem Backend-Server, von Fahrzeugdaten des Fahrzeugs;
Ermitteln, am Backend-Server, von Daten mit Bezug auf die externen Einflussfaktoren unter Berücksichtigung zumindest eines Teils der Fahrzeugdaten;
Ermitteln, durch den Backend-Server, optimaler Einstellungen von Fahrzeugfunktionen des Fahrzeugs unter Berücksichtigung der Fahrzeugdaten und der Daten mit Bezug auf die externen Einflussfaktoren; und
Steuern, der Fahrzeugfunktionen des Fahrzeugs derart, dass die ermittelten optimalen Fahrzeugfunktionen übernommen werden.

Vorzugsweise umfassen die externen Einflussfaktoren:
- zeitaktuelle Luftqualitätswerte;
- zeitaktuelle Fahreinschränkungen in Umweltzonen für emittierende und/oder stark emittierende Fahrzeuge; und/oder
- lokale Verkehrsvorgaben und/oder Verkehrsverordnungen, die auf der Fahrstrecke gelten.

Erfindungsgemäß umfassen die Fahrzeugdaten:
aktuelle Emissions-Zustandsdaten des Fahrzeugs (110). Erfindungsgemäß umfassen die Fahrzeugfunktionen:
- eine maximale Höchstgeschwindigkeit, die erforderlich ist, um
   -- zeitaktuelle Fahreinschränkungen in Umweltzonen zu umgehen.

Vorzugsweise ist das Fahrzeug ein Hybridfahrzeug, wobei die Fahrzeugfunktionen Betriebsmodi des Fahrzeugs umfassen.

Diese und andere Aufgaben, Merkmale und Vorteile der vorliegenden Erfindung werden aus dem Studium der folgenden detaillierten Beschreibung bevorzugter Ausführungsformen und der beiliegenden Figuren verdeutlicht. Es ist ersichtlich, dass - obwohl Ausführungsformen separat beschrieben werden - einzelne Merkmale daraus zu zusätzlichen Ausführungsformen kombiniert werden können.
- **Fig. 1**: zeigt ein schematisches System zur automatischen Einstellung von Fahrzeugfunktionen eines Fahrzeugs unter Berücksichtigung externer Fahrzeugfunktionen;
- **Fig. 2**: zeigt ein Flussdiagramm, das ein beispielhaftes Verfahren zur automatischen Einstellung von Fahrzeugfunktionen eines Fahrzeugs unter Berücksichtigung externer Fahrzeugfunktionen veranschaulicht.

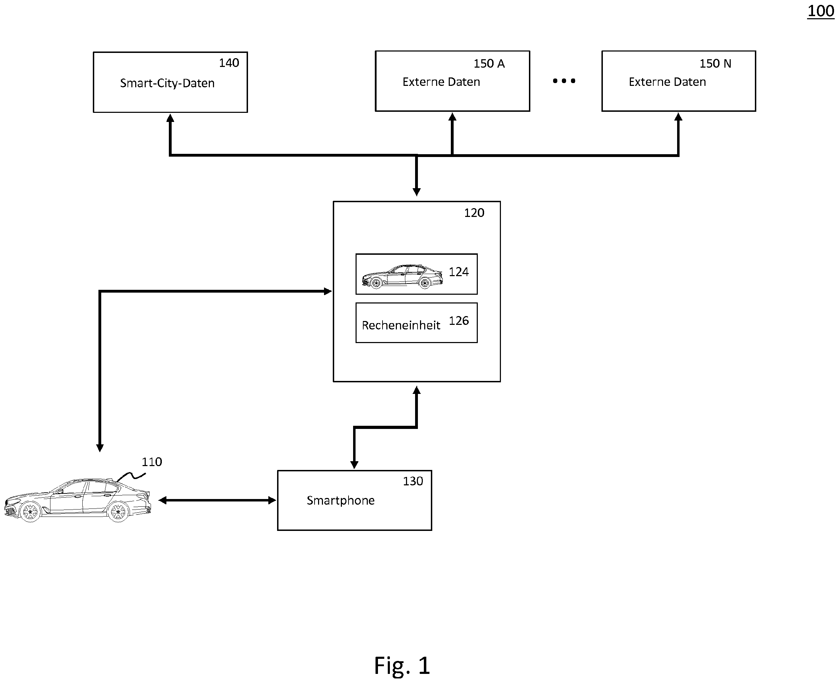

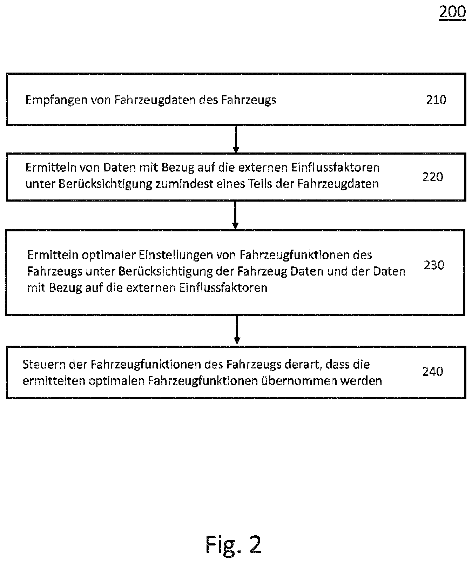

**Figur 1** zeigt schematisch ein beispielhaftes System 100, zur automatischen Einstellung von Fahrzeugfunktionen eines Fahrzeugs 110 unter Berücksichtigung externer Fahrzeugfunktionen. Auf dem System 100 kann ein Verfahren 200 wie weiter unten mit Bezug auf Figur 2 näher erläutert, ausgeführt werden.

Das System 100 umfasst zumindest einen Backend-Server 120 bzw. eine Backend-Recheneinrichtung 120. Der Backend-Server 120 ist eingerichtet, Fahrzeugdaten des Fahrzeugs 110 zu empfangen.

Das Fahrzeug 110 kann Kommunikationsmodul (nicht gezeigt) umfassen. Das Kommunikationsmodul ist in der Lage, eine Kommunikationsverbindung mit anderen Kommunikationsteilnehmern, z.B. anderen Fahrzeugen, dem Backend-Server, mobilen Endgeräten etc., aufzubauen, um Daten zu übertragen. Das Kommunikationsmodul kann ein Teilnehmeridentitätsmodul bzw. ein Subscriber Identity Module bzw. eine SIM-Karte (nicht gezeigt) umfassen, welche(s) dazu dient, eine Kommunikationsverbindung über ein Mobilfunksystem aufzubauen. Das Teilnehmeridentitätsmodul identifiziert dabei das Kommunikationsmodul eindeutig im Mobilfunknetz. Bei der Kommunikationsverbindung kann es sich um eine Datenverbindung (z.B. Paketvermittlung) und/oder um eine leitungsgebundene Kommunikationsverbindung (z.B. Leitungsvermittlung) handeln. Auch eine drahtlose Kommunikationsverbindung über weitere gängige und künftige Technologien, z.B. lokale Netzwerke bzw. Local Area Networks (LANs) wie z.B. Wireless LANs etc. kann über das Kommunikationsmodul mit anderen Kommunikationsteilnehmern aufgebaut werden.

Insbesondere kann das Fahrzeug 110 über das Kommunikationsmodul eine Kommunikationsverbindung mit dem Backend-Server 120 aufbauen, um die Fahrzeugdaten an den Backend-Server 120 zu übertragen. Das Fahrzeug 110 kann beispielsweise eingerichtet sein, während des Fahrbetriebs Fahrzeugdaten an den Backend-Server zu übertragen.

Die Fahrzeugdaten umfassen aktuelle Emissions-Zustandsdaten des Fahrzeugs 110. Emissions-Zustandsdaten umfassen alle Daten, die einen Bezug zu Emissionen bzw. Emissionswerte des Fahrzeugs 110 haben.

Insbesondere umfassen die Emissions-Zustandsdaten:
Daten zu Fahrzeugemissionen des Fahrzeugs 110 mit Bezug auf die Fahrgeschwindigkeit.

Darüber hinaus können die Fahrzeugdaten zumindest ein geplantes Fahrziel des Fahrzeugs 110 umfassen. Das geplante Fahrziel kann eine späteste Ankunftszeit am geplanten Fahrziel umfassen.

Das geplante Fahrziel und eine späteste Ankunftszeit des Fahrzeugs 110 am geplanten Fahrziel können an den Backend-Server 120 übermittelt werden. Beispielsweise kann ein Nutzer des Fahrzeugs 110 über das Navigationssystem und/oder über ein geeignetes, mit dem Fahrzeug 110 gekoppeltes mobiles Endgerät 130 ein geplantes Fahrziel eingeben. Das Fahrziel kann vom Fahrzeug 110 bzw. vom mobilen Endgerät 130 (z.B. Smartphone) an den Backend-Server 120 übermittelt werden. Darüber hinaus können weitere persönliche Daten des Nutzers des Fahrzeugs vom Fahrzeug 110 bzw. vom mobilen Endgerät 130 an den Backend-Server 120 übermittelt werden, wie z.B. Daten eines persönlichen elektronischen Kalenders, über die eine späteste Ankunftszeit am geplanten Fahrziel berechnet bzw. ermittelt werden kann. Die späteste Ankunftszeit kann auch über eine Ein- und Ausgabeeinheit des Fahrzeugs 110 bzw. des mobilen Endgeräts 130 vom Nutzer des Fahrzeugs 110 eingegeben und an den Backend-Server 120 übermittelt werden. Der Nutzer des Fahrzeugs 110 kann dessen Fahrer sein.

Beispielsweise kann der Backend-Server 120 eingerichtet sein, für jedes - zuvor entsprechend registrierte - Fahrzeug 110 einen digitalen Zwilling 124 zu erstellen. Ein digitaler Zwilling bzw.

Digital Twin ist eine virtuelle Repräsentation eines physikalischen Objekts. Der digitale Zwilling 124 eines Fahrzeugs 110 umfasst insbesondere eine digitale Repräsentation von Fahrzeugdaten des Fahrzeugs 110 am Backend-Server 120. Insbesondere ist ein Digitaler Zwilling eine dedizierte Umgebung, um Fahrzeugdaten zu hinterlegen, diese abzurufen und/oder Änderungen zu erfassen. Die Fahrzeugdaten umfassen Sensordaten. Das Fahrzeug kann eingerichtet sein, in regelmäßigen Abständen, z.B. alle 0,1 Sekunden (s), 0,5 Sekunden (s), alle 1 s, alle 1,5 s, etc. und/oder zu vordefinierten Ereignissen, z.B. nach jeder Datenerfassung, jeder zweiten Datenerfassung, etc. durch den jeweiligen Sensor die Sensordaten an den Backend-Server 120 übermitteln. Der digitale Zwilling kann ein oder mehrere Datenmodelle für die Verarbeitung der Fahrzeugdaten umfassen.

Der Backend-Server 120 ist eingerichtet, unter Berücksichtigung zumindest eines Teils der empfangenen Fahrzeugdaten des Fahrzeugs 110 Daten mit Bezug auf die externen Einflussfaktoren zu ermitteln.

Die externen Einflussfaktoren können dabei
- zeitaktuelle Luftqualitätswerte;
- zeitaktuelle Fahreinschränkungen in Umweltzonen für emittierende und/oder stark emittierende Fahrzeuge; und/oder
- lokale Verkehrssituation, Verkehrsvorgaben und/oder Verkehrsverordnungen, die auf der Fahrstrecke gelten;
   umfassen.

Zeitaktuelle Luftqualitätswerte umfassen insbesondere zeitaktuelle Werte mit Bezug auf verkehrsbedingte Luftbelastungen. Eine verkehrsbedingte Luftbelastung liegt vor, wenn zuvor beispielsweise durch Behörden festgelegte Luftqualitätsgrenzwerte nicht eingehalten werden.

Der Begriff Umweltzone umfasst Gebiete in städtischen Agglomerationen, in denen das Befahren durch emittierende und/oder stark emittierende Fahrzeuge aufgrund verkehrsbedingter Luftbelastungen eingeschränkt oder verboten wird. Insbesondere können die Fahreinschränkungen bzw. Fahrverbote von emittierenden und/oder stark emittierenden Fahrzeugen hochdynamisch mit Bezug auf zeitaktuelle Luftqualitätswerte erfolgen.

Beispielsweise kann jede Agglomeration über ein so genanntes "Smart City"-Konzept 140 entsprechende, hochdynamische Fahreinschränkungen bzw. Fahrverbote kommunizieren. "Smart City" ist ein Sammelbegriff für gesamtheitliche Entwicklungskonzepte, die darauf abzielen, Städte bzw. Agglomerationen effizienter, technologisch fortschrittlicher und grüner zu gestalten. Diese Konzepte umfassen technische und gesellschaftliche Innovationen. "Smart City" umfasst die Dimension Mobilität bzw. "Smarte Mobilität". Diese Dimension zeichnet sich dadurch aus, dass sie energieeffizient und emissionsarm ist. Insbesondere wird die vorhandene Infrastruktur verbessert, indem Informations- und Kommunikationstechnologien eingesetzt werden, die dabei helfen, den Verkehr zu überwachen. Die Verkehrsüberwachung umfasst die Erfassung zeitaktueller Luftqualitätswerte.

Somit können zeitaktuelle Luftqualitätswerte und/oder zeitaktuelle Fahreinschränkungen als externe Einflussfaktoren in Umweltzonen für emittierende und/oder stark emittierende Fahrzeuge 110 beispielsweise automatisch unter Verwendung geeigneter Informations- und Kommunikationstechnologien 140 automatisch erfasst und an den Backend-Server 120 übermittelt werden.

Darüber hinaus oder alternativ dazu können externe Einflussfaktoren lokale Verkehrsvorgaben und/oder Verkehrsverordnungen, die auf einer (geplanten) Fahrstrecke gelten, umfassen.

Der Backend-Server kann unter Berücksichtigung der Fahrzeugdaten des Fahrzeugs 110 und der externen Einflussfaktoren optimale Einstellungen von Fahrzeugfunktionen ermitteln.

Beispielsweise kann der Backend-Server 120 selbst eingerichtet sein, zumindest einen Telematik-Dienst zu erbringen. Der Telematik-Dienst kann die Ermittlung und Bereitstellung von Daten mit Bezug auf die externen Einflussfaktoren umfassen. Im Rahmen dieses Telematik-Dienstes können die Daten mit Bezug auf externe Einflussfaktoren zu vordefinierten Ereignissen von ein oder mehreren Service Providern bzw. Dienstleistungs-Anbietern empfangen und/oder abgerufen werden (polling). Darüber hinaus oder alternativ dazu kann der Backend-Server 120 eingerichtet sein, Daten mit Bezug auf die externen Einflussfaktoren - unter Berücksichtigung zumindest eines Teils der Fahrzeugdaten - von zumindest einem Externen Service Providern 150A ... 150N zu vordefinierten Ereignissen abzurufen. Ein Service Provider 151 A ... 150 N kann ein Internet Service Provider sein, der über das Internet Dienste, Inhalte und/oder technische Leistungen bereitstellt, die für die Nutzung oder den Betrieb von Inhalten und Diensten im Internet erforderlich sind. Vordefinierte Ereignisse können z.B. umfassen: periodisch, z.B. alle 1 Sekunden, alle 2 Sekunden, jede Minute, alle 5 Minuten etc. Darüber hinaus oder alternativ dazu können vordefinierte Ereignisse umfassen: nach Empfangen von Fahrzeugdaten und/oder bei anderen geeigneten vordefinierten Ereignissen.

Beispielsweise kann der zumindest eine Telematik-Dienst die Bereitstellung von Quasi-Echtzeit-Informationen mit Bezug auf aktuelle Luftqualitätswerte in betroffenen Agglomerationen (z.B. Ballungsräumen und/oder Stadtregionen und/oder Verdichtungsräumen und/oder Innenstadtgebieten etc.) umfassen. Darüber hinaus oder alternativ dazu kann der zumindest eine Telematik-Dienst die Bereitstellung von hochaktuelle Einschränkungen oder Verboten mit Bezug auf das Befahren der jeweiligen Agglomerationen durch emittierende und/oder stark emittierende Fahrzeuge aufgrund verkehrsbedingter Luftbelastungen und/oder weiterer Gründe umfassen.

Der Backend-Server 120 ist eingerichtet, unter Berücksichtigung der Fahrzeugdaten des Fahrzeugs 110 und der Daten mit Bezug auf die externen Einflussfaktoren optimale Einstellungen von Fahrzeugfunktionen zu ermitteln. Dies kann über eine geeignete Recheneinheit 126 erfolgen.

Die Fahrzeugfunktionen umfassen:
- eine maximale Höchstgeschwindigkeit, die erforderlich ist, um
   -- zeitaktuelle Fahreinschränkungen in Umweltzonen zu umgehen.

Erfindungsgemäß ermittelt der Backend-Server 120 unter Berücksichtigung der Fahrzeugdaten und der externen Einflussfaktoren eine maximale Höchstgeschwindigkeit, die erforderlich ist bzw. eingehalten werden muss, um zeitaktuelle Fahreinschränkungen in Umweltzonen zu umgehen, da bei der ermittelten maximalen Höchstgeschwindigkeit die Emissionswerte derart sind, dass Fahreinschränkungen umgangen werden. Darüber hinaus kann der Backend-Server 120 unter Berücksichtigung der Fahrzeugdaten und der externen Einflussfaktoren eine maximale Höchstgeschwindigkeit des Fahrzeugs 110 ermitteln die erforderlich ist bzw. eingehalten werden muss, um lokale Verkehrsvorgaben und/oder Verkehrsverordnungen einzuhalten. Mit anderen Worten können die Fahrzeugfunktionen eine Drosselung des Fahrzeugs 110 auf die ermittelte maximale Höchstgeschwindigkeit umfassen.

Darüber hinaus kann der Backend-Server 120 eine modifizierte (z.B. nicht optimale) Fahrroute ermitteln, die erforderlich ist, um zeitaktuellen Fahreinschränkungen in Umweltzonen zu umgehen bzw. eine oder mehrere Umweltzonen zu umfahren. Beispielsweise können zeitaktuelle Fahreinschränkungen erfordern, dass nur emissionsfreie Fahrzeuge in bzw. durch die Umweltzone eines Stadtgebiets fahren dürfen, wohingegen das konkrete Fahrzeug 110von einem Verbrennungsmotor angetrieben wird. In diesem Fall kann der Backend-Server 120 eine erforderliche Umfahrung der entsprechenden Umweltzone ermitteln. Darüber hinaus oder alternativ dazu kann der Backend-Server 120 eingerichtet sein, eine modifizierte (z.B. nicht optimale) Fahrroute ermitteln, die erforderlich ist, um lokale Verkehrsvorgaben und/oder Verkehrsverordnungen zu umgehen. Mit anderen Worten können die Fahrzeugfunktionen automatische Routenanpassungen umfassen.

Darüber hinaus können die Fahrzeugfunktionen Fahrmodi, die einen Einfluss auf die Fahrzeugemissionen bzw. die Emissionsrate des Fahrzeugs 110 haben, umfassen. Solche Fahrmodi können einen Fahrmodus "ECO PRO" umfassen, der die Emissionsrate des Fahrzeugs 110 reduziert.

In einem nächsten Schritt kann der Backend-Server 120 eingerichtet sein, die optimalen Einstellungen der Fahrzeugfunktionen an das Fahrzeug 110 zu übermitteln.

Im Fahrzeug 110 können die betroffenen Fahrzeugfunktionen derart gesteuert werden, dass die durch den Backend-Server 120 ermittelten optimalen Fahrzeugfunktionen unter Berücksichtigung der externen Einflussfaktoren automatisch übernommen werden.

Vorteilhafter Weise kann das Fahrzeug 110 somit Fahrzeugfunktionen automatisch an hochdynamische externe Einflussfaktoren anpassen, ohne dass es eines Eingriffs durch den Fahrer des Fahrzeugs 110 bedarf.

Ist das Fahrzeug 110 ein Hybridfahrzeug, können die Fahrzeugfunktionen Betriebsmodi des Fahrzeugs 110 umfassen.

Hybridfahrzeuge sind Fahrzeuge mit hybriden Antriebskonzepten bzw. Hybridantrieben (Hybridfahrzeuge). Sie zeichnen sich dadurch aus, dass sich ihr Antrieb aus zumindest zwei unterschiedlichen Antreiben, die von jeweils unterschiedlichen Energiespeichern gespeist werden, zusammensetzt. Beispielsweise kann die Antriebs-Kombination von Elektro- und Verbrennungsmotor vorliegen. Die Energiespeicher sind dann die Batterie - Z.B. Lithium-Ionen Akkumulator - als elektrischer Energiespeicher - und der Kraftstofftank. Moderne Hybridfahrzeuge bieten Ihren Nutzern bzw. Fahrern die Möglichkeit, aus verschiedenen Betriebsmodi mit Bezug auf die hybriden Antriebskonzepte zu wählen. Beispielsweise kann bei vorgenannter Antriebskombination zwischen Elektro- und Verbrennungsmotor ein Betriebsmodus "automatisch" bereitgestellt werden, bei dem das Fahrzeug unter Berücksichtigung fahrzeugspezifischer Parameter - z.B. unter Berücksichtigung von Leistung und Energieverbrauch - die optimale Antriebsvariante wählt bzw. entscheidet, ob das Hybridfahrzeug allein vom Elektromotor, allein vom Verbrennungsmotor oder parallel von beiden Motoren angetrieben wird. Ein weiteres Beispiel ist der Betriebsmodus "elektrisch" zur Auswahl bereitgestellt werden, bei dem der Antrieb rein durch den Elektromotorerfolgt. Darüber hinaus kann ein Betriebsmodus "konventionell" zur Wahl bereitgestellt werden, bei dem der Antrieb rein durch den Verbrennungsmotor erfolgt. In einem weiteren Beispiel kann der Betriebsmodus "Laden" ausgewählt werden, in dem der elektrische Energiespeicher durch den Verbrennungsmotor geladen wird, um die rein elektrische Reichweite des Fahrzeugs zu erhöhen.

Die Fahrzeugfunktionen können bei Hybridfahrzeugen die Betriebsmodi des Fahrzeugs umfassen. Vorteilhafter Weise kann für Gebiete, in die keine emittierenden Fahrzeuge einfahren dürfen, durch den Backend-Server automatisch ein Betriebsmodus "elektrisch" ermittelt und an das Fahrzeug gesendet werden, wo dieser Betriebsmodus für in dem Gebiet automatisch ausgewählt wird.

Vorteilhafter Weise können die Betriebsmodi bei Hybridfahrzeugen automatisch im Fahrzeug entlang der Strecke - wie durch die externen Einflussfaktoren mit Bezug auf die Fahrzeugdaten erforderlich - übernommen werden.

In einem Beispiel können die Fahrzeugdaten eine geplante Route eines Hybridfahrzeugs 110 umfassen. Der Backend-Server 120 kann unter Berücksichtigung der geplanten Route als externen Einflussfaktor ermitteln, dass auf der geplanten Route ein Streckenabschnitt von 25 Kilometern (km) Länge nur von emissionsfreien Fahrzeugen befahren werden darf. Der Backend-Server 120 kann aus dem zum Hybridfahrzeug 110 gespeicherten digitalen Zwilling 124 auslesen, dass das Hybridfahrzeug 110 lediglich eine rein elektrische Restreichweite von 20 km hat. In diesem Fall kann der Backend-Server 120 als optimale Einstellung einer Fahrzeugfunktion unter Berücksichtigung der Fahrzeugdaten und der externen Einflussfaktoren ermitteln, dass der Betriebsmodus "Laden" gewählt werden muss, um elektrischen Energiespeicher des Hybridfahrzeugs durch den Verbrennungsmotor zu laden. Als weitere optimale Einstellung einer Fahrzeugfunktion kann der Backend-Server 120ermitteln, dass kurz vor Eintritt des nur rein elektrisch befahrbaren Streckenabschnitts der Betriebsmodus "elektrisch" ist.

Der Backend-Server 120 kann die ermittelten optimalen Einstellungen der Fahrzeugfunktionen an das Fahrzeug 110 übermitteln. Das Fahrzeug 110 kann mithilfe einer Steuereinheit das Fahrzeug 110 derart steuern, dass der Betriebsmodus "Laden" eingestellt wird. Kurz vor Erreichen der rein elektrisch befahrbaren Strecke kann die Steuereinheit das Fahrzeug 110 derart steuern, dass der Betriebsmodus "rein elektrisch" eingestellt wird.

**Figur 2** zeigt ein Flussdiagramm, das ein Verfahren 200 zur automatischen Einstellung von Fahrzeugfunktionen eines Fahrzeugs unter Berücksichtigung externer Fahrzeugfunktionen veranschaulicht, das auf einem System 100 - wie mit Bezug auf Figur 1 beschrieben - ausgeführt werden kann.

Das Verfahren 200 umfasst
Empfangen 210, an einem Backend-Server 120, von Fahrzeugdaten des Fahrzeugs 110;
Ermitteln 220, am Backend-Server 120, von Daten mit Bezug auf die externen Einflussfaktoren unter Berücksichtigung zumindest eines Teils der Fahrzeugdaten;
Ermitteln 230, durch den Backend-Server 120, optimaler Einstellungen von Fahrzeugfunktionen des Fahrzeugs 110 unter Berücksichtigung der Fahrzeugdaten und der Daten mit Bezug auf die externen Einflussfaktoren; und
Steuern 240, der Fahrzeugfunktionen des Fahrzeugs 110 derart, dass die ermittelten optimalen Fahrzeugfunktionen übernommen werden.

Die externen Einflussfaktoren können umfassen:
- zeitaktuelle Luftqualitätswerte;
- zeitaktuelle Fahreinschränkungen in Umweltzonen für emittierende und/oder stark emittierende Fahrzeuge; und/oder
- lokale Verkehrsvorgaben und/oder Verkehrsverordnungen, die auf der Fahrstrecke gelten.

Die Fahrzeugdaten umfassen:
aktuelle Emissions-Zustandsdaten des Fahrzeugs 110.

Die Fahrzeugfunktionen umfassen:
- eine maximale Höchstgeschwindigkeit, die erforderlich ist, um
   -- zeitaktuelle Fahreinschränkungen in Umweltzonen zu umgehen.

Das Fahrzeug 110 kann ein Hybridfahrzeug sein, wobei die Fahrzeugdaten Betriebsmodi des Fahrzeugs 110 umfassen können.

## Patentansprüche

1. System (100) zur automatischen Einstellung von Fahrzeugfunktionen eines Fahrzeugs (110) unter Berücksichtigung externer Einflussfaktoren, umfassend:
zumindest einen Backend-Server (120) der eingerichtet ist:
- Fahrzeugdaten des Fahrzeugs (110) zu empfangen;
wobei die Fahrzeugdaten aktuelle Emissions-Zustandsdaten des Fahrzeugs (110) umfassen,
- unter Berücksichtigung zumindest eines Teils der Fahrzeugdaten Daten mit Bezug auf die externen Einflussfaktoren zu ermitteln;
- optimale Einstellungen von Fahrzeugfunktionen des Fahrzeugs (110) unter Berücksichtigung der Fahrzeugdaten und der Daten mit Bezug auf die externen Einflussfaktoren zu ermitteln; und
- die optimalen Einstellungen der Fahrzeugfunktionen an das Fahrzeug (110) zu übermitteln;
wobei das Fahrzeug (110) eingerichtet ist, die Fahrzeugfunktionen derart zu steuern, dass die ermittelten optimalen Fahrzeugfunktionen übernommen werden,
**dadurch gekennzeichnet, dass**
die Fahrzeugfunktionen eine maximale Höchstgeschwindigkeit, die erforderlich ist, um zeitaktuelle Fahreinschränkungen in Umweltzonen für emittierende und/oder stark emittierende Fahrzeuge zu umgehen, umfassen, und wobei die Emissions-Zustandsdaten Daten zur Fahrzeugemission des Fahrzeugs (110) mit Bezug auf die Fahrgeschwindigkeit umfassen.

2. System (100) gemäß Anspruch 1, wobei die externen Einflussfaktoren umfassen:
- zeitaktuelle Luftqualitätswerte;
- zeitaktuelle Fahreinschränkungen in Umweltzonen für emittierende und/oder stark emittierende Fahrzeuge; und/oder
- lokale Verkehrsvorgaben und/oder Verkehrsverordnungen, die auf einer Fahrstrecke gelten.

3. System (100) gemäß Anspruch 1 oder 2, wobei die Fahrzeugdaten weiter zumindest ein geplantes Fahrziel des Fahrzeugs (110) umfassen.

4. System (100) gemäß einem der vorangehenden Ansprüche, wobei die Fahrzeugfunktionen umfassen:
- eine maximale Höchstgeschwindigkeit, die erforderlich ist, um
-- lokale Verkehrsvorgaben und/oder Verkehrsverordnungen einzuhalten; und/oder
- eine modifizierte Fahrroute, die erforderlich ist, um zeitaktuellen Fahreinschränkungen in Umweltzonen und/oder lokale Verkehrsvorgaben und/oder Verkehrsverordnungen zu umgehen; und/oder
- Fahrmodi, die einen Einfluss auf die Fahrzeugemissionen des Fahrzeugs (110) haben.

5. System (100) gemäß einem der vorangehenden Ansprüche,
wobei das Fahrzeug (110) ein Hybridfahrzeug ist; und
wobei die Fahrzeugfunktionen Betriebsmodi des Fahrzeugs (110) umfassen.

6. Verfahren (200) zur automatischen Einstellung von Fahrzeugfunktionen eines Fahrzeugs (110) unter Berücksichtigung externer Einflussfaktoren, umfassend:
Empfangen (210), an einem Backend-Server (120), von Fahrzeugdaten des Fahrzeugs (110);
wobei die Fahrzeugdaten aktuelle Emissions-Zustandsdaten des Fahrzeugs (110) umfassen,
Ermitteln (220), am Backend-Server (120), von Daten mit Bezug auf die externen Einflussfaktoren unter Berücksichtigung zumindest eines Teils der Fahrzeugdaten;
Ermitteln (230), durch den Backend-Server (120), optimaler Einstellungen von Fahrzeugfunktionen des Fahrzeugs (110) unter Berücksichtigung der Fahrzeugdaten und der Daten mit Bezug auf die externen Einflussfaktoren;
Übermitteln, durch den Backend-Server (120), der ermittelten optimalen Einstellungen der Fahrzeugfunktionen an das Fahrzeug (110); und
Steuern (240), der Fahrzeugfunktionen des Fahrzeugs (110) derart, dass die ermittelten optimalen Fahrzeugfunktionen übernommen werden,
**dadurch gekennzeichnet, dass**
die Fahrzeugfunktionen eine maximale Höchstgeschwindigkeit, die erforderlich ist, um zeitaktuelle Fahreinschränkungen in Umweltzonen für emittierende und/oder stark emittierende Fahrzeuge zu umgehen, umfassen, und wobei die Emissions-Zustandsdaten Daten zur Fahrzeugemission des Fahrzeugs (110) mit Bezug auf die Fahrgeschwindigkeit umfassen.

7. Verfahren (200) gemäß Anspruch 6, wobei die externen Einflussfaktoren umfassen:
- zeitaktuelle Luftqualitätswerte;
- zeitaktuelle Fahreinschränkungen in Umweltzonen für emittierende und/oder stark emittierende Fahrzeuge; und/oder
- lokale Verkehrsvorgaben und/oder Verkehrsverordnungen, die auf einer Fahrstrecke gelten.

8. Verfahren (200) gemäß Anspruch 6 oder 7, wobei die Fahrzeugdaten weiter zumindest ein geplantes Fahrziel des Fahrzeugs (110) umfassen.

9. Verfahren (200) gemäß einem der Ansprüche 6 bis 8, wobei die Fahrzeugfunktionen umfassen:
- eine maximale Höchstgeschwindigkeit, die erforderlich ist, um
-- lokale Verkehrsvorgaben und/oder Verkehrsverordnungen einzuhalten; und/oder
- eine modifizierte Fahrroute, die erforderlich ist, um zeitaktuellen Fahreinschränkungen in Umweltzonen und/oder lokale Verkehrsvorgaben und/oder Verkehrsverordnungen zu umgehen; und/oder
- Fahrmodi, die einen Einfluss auf die Fahrzeugemissionen des Fahrzeugs (110) haben.

10. Verfahren (200) gemäß einem der Ansprüche 6 bis 9,
wobei das Fahrzeug (110) ein Hybridfahrzeug ist; und
wobei die Fahrzeugfunktionen Betriebsmodi des Fahrzeugs (110) umfassen.

## Claims

1. System (100) for automatically setting vehicle functions of a vehicle (110) taking into account external influencing factors, comprising:
at least one back-end server (120) which is configured:
- to receive vehicle data relating to the vehicle (110);
wherein the vehicle data comprise current emission status data relating to the vehicle (110),
- to determine data with respect to the external influencing factors taking into account at least some of the vehicle data;
- to determine optimum settings of vehicle functions of the vehicle (110) taking into account the vehicle data and the data with respect to the external influencing factors; and
- to transmit the optimum settings of the vehicle functions to the vehicle (110);
wherein the vehicle (110) is configured to control the vehicle functions in such a manner that the determined optimum vehicle functions are adopted,
**characterized in that**
the vehicle functions comprise a maximum speed which is needed to circumvent up-to-date driving restrictions in environmental zones for emitting and/or highly emitting vehicles, and
wherein the emission status data comprise data relating to the vehicle emission of the vehicle (110) with respect to the driving speed.

2. System (100) according to Claim 1, wherein the external influencing factors comprise:
- up-to-date air quality values;
- up-to-date driving restrictions in environmental zones for emitting and/or highly emitting vehicles; and/or
- local traffic specifications and/or traffic regulations which apply on a route.

3. System (100) according to Claim 1 or 2, wherein the vehicle data further comprise at least one planned destination of the vehicle (110).

4. System (100) according to one of the preceding claims, wherein the vehicle functions comprise:
- a maximum speed which is needed
-- to comply with local traffic specifications and/or traffic regulations; and/or
- a modified route which is needed to circumvent up-to-date driving restrictions in environmental zones and/or local traffic specifications and/or traffic regulations; and/or
- driving modes which influence the vehicle emissions of the vehicle (110).

5. System (100) according to one of the preceding claims,
wherein the vehicle (110) is a hybrid vehicle; and
wherein the vehicle functions comprise operating modes of the vehicle (110).

6. Method (200) for automatically setting vehicle functions of a vehicle (110) taking into account external influencing factors, comprising:
receiving (210), at a back-end server (120), vehicle data relating to the vehicle (110);
wherein the vehicle data comprise current emission status data relating to the vehicle (110),
determining (220), at the back-end server (120), data with respect to the external influencing factors taking into account at least some of the vehicle data;
determining (230), by means of the back-end server (120), optimum settings of vehicle functions of the vehicle (110) taking into account the vehicle data and the data with respect to the external influencing factors;
transmitting, by means of the back-end server (120), the determined optimum settings of the vehicle functions to the vehicle (110); and
controlling (240) the vehicle functions of the vehicle (110) in such a manner that the determined optimum vehicle functions are adopted,
**characterized in that**
the vehicle functions comprise a maximum speed which is needed to circumvent up-to-date driving restrictions in environmental zones for emitting and/or highly emitting vehicles, and
wherein the emission status data comprise data relating to the vehicle emission of the vehicle (110) with respect to the driving speed.

7. Method (200) according to Claim 6, wherein the external influencing factors comprise:
- up-to-date air quality values;
- up-to-date driving restrictions in environmental zones for emitting and/or highly emitting vehicles; and/or
- local traffic specifications and/or traffic regulations which apply on a route.

8. Method (200) according to Claim 6 or 7, wherein the vehicle data further comprise at least one planned destination of the vehicle (110).

9. Method (200) according to one of Claims 6 to 8, wherein the vehicle functions comprise:
- a maximum speed which is needed
-- to comply with local traffic specifications and/or traffic regulations; and/or
- a modified route which is needed to circumvent up-to-date driving restrictions in environmental zones and/or local traffic specifications and/or traffic regulations; and/or
- driving modes which influence the vehicle emissions of the vehicle (110).

10. Method (200) according to one of Claims 6 to 9,
wherein the vehicle (110) is a hybrid vehicle; and
wherein the vehicle functions comprise operating modes of the vehicle (110).

## Revendications

1. Système (100) de réglage automatique de fonctions d'un véhicule (110) en tenant compte de facteurs d'influence externes, ledit système comprenant :
au moins un serveur dorsal (120) qui est conçu pour :
- recevoir des données de véhicule du véhicule (110) ; les données de véhicule comprenant des données d'état d'émissions actuelles du véhicule (110),
- déterminer des données relatives aux facteurs d'influence externes en tenant compte d'au moins une partie des données de véhicule ;
- déterminer des réglages optimaux de fonctions de véhicule (110) en tenant compte des données de véhicule et des données relatives aux facteurs d'influence externes ; et
- transmettre les réglages optimaux des fonctions de véhicule au véhicule (110) ;
le véhicule (110) étant conçu pour commander les fonctions de véhicule de manière à adopter les fonctions de véhicule optimales déterminées,
**caractérisé en ce que**
les fonctions de véhicule comprennent une vitesse limite maximale qui est requise pour éviter des restrictions de circulation en vigueur dans les zones environnementales pour des véhicules émetteurs et/ou fortement émetteurs, et
les données d'état d'émission comprenant des données d'émission du véhicule (110) par rapport à la vitesse.

2. Système (100) selon la revendication 1, les facteurs d'influence externes comprenant :
- des valeurs actuelles de la qualité de l'air ;
- des restrictions de circulation actuelles dans les zones environnementales pour les véhicules émetteurs et/ou fortement émetteurs ; et/ou
- les règles de circulation locales et/ou les décrets de circulation qui sont applicables sur un itinéraire.

3. Système (100) selon la revendication 1 ou 2, les données de véhicule comprenant en outre au moins une destination planifiée du véhicule (110).

4. Système (100) selon l'une des revendications précédentes, les fonctions de véhicule comprenant :
- une vitesse limite maximale qui est requise pour
-- respecter les règles de circulation locales et/ou les décrets de circulation ; et/ou
- un itinéraire modifié qui est requis pour éviter les restrictions de circulation actuelles dans les zones environnementales et/ou les règles de circulation locales et/ou les décrets de circulation ; et/ou
- des modes de conduite qui ont une influence sur les émissions du véhicule (110).

5. Système (100) selon l'une des revendications précédentes,
le véhicule (110) étant un véhicule hybride ; et
les fonctions de véhicule comprenant des modes de fonctionnement du véhicule (110).

6. Procédé (200) de réglage automatique des fonctions de véhicule d'un véhicule (110) en tenant compte de facteurs d'influence externes, ledit procédé comprenant les étapes suivantes :
recevoir (210), au niveau d'un serveur dorsal (120), des données de véhicule du véhicule (110) ;
les données du véhicule comprenant des données actuelles sur l'état des émissions du véhicule (110),
déterminer (220), au niveau du serveur dorsal (120), des données relatives aux facteurs d'influence externes avec prise en compte d'au moins une partie des données de véhicule ;
déterminer (230), au niveau du serveur dorsal (120), des réglages optimaux de fonctions de véhicule du véhicule (110), avec prise en compte des données de véhicule et des données relatives aux facteurs d'influence externes ;
transmettre, par le biais du serveur dorsal (120), les réglage optimaux déterminés des fonctions de véhicule au véhicule (110) ; et
commander (240) les fonctions de véhicule (110) de manière à adopter les fonctions de véhicule optimales déterminées,
**caractérisé en ce que**
les fonctions de véhicule comprennent une vitesse limite maximale qui est requise pour éviter les restrictions de circulation actuelles dans les zones environnementales pour des véhicules émetteurs et/ou fortement émetteurs, et
les données d'état d'émission comprenant des données d'émission du véhicule (110) par rapport à la vitesse.

7. Procédé (200) selon la revendication 6, les facteurs d'influence externes comprenant :
- des valeurs actuelles de la qualité de l'air ;
- des restrictions de circulation actuelles dans les zones environnementales pour les véhicules émetteurs et/ou fortement émetteurs ; et/ou
- des règles de circulation locales et/ou des décrets de circulation qui sont applicables sur un itinéraire.

8. Procédé (200) selon la revendication 6 ou 7, les données de véhicule comprenant en outre au moins une destination planifiée du véhicule (110).

9. Procédé (200) selon l'une des revendications 6 à 8, les fonctions de véhicule comprenant :
- une vitesse limite maximale qui est requise pour
-- respecter les règles de circulation locales et/ou les décrets de circulation ; et/ou
- un itinéraire modifié qui est requis pour éviter les restrictions de circulation actuelles dans les zones environnementales et/ou les règles de circulation locales et/ou les décrets de circulation ; et/ou
- des modes de conduite qui ont une influence sur les émissions du véhicule (110).

10. Procédé (200) selon l'une des revendications 6 à 9,
le véhicule (110) étant un véhicule hybride ; et
les fonctions de véhicule comprenant des modes de fonctionnement du véhicule (110).
